(19) Europäisches Patentamt
European Patent Office
Office européen des brevets

(11) Veröffentlichungsnummer: **0 034 782**
**A2**

# (12) EUROPÄISCHE PATENTANMELDUNG

(21) Anmeldenummer: 81101051.1

(22) Anmeldetag: 14.02.81

(51) Int. Cl.³: C 08 G 69/26

(30) Priorität: 16.02.80 DE 3005939

(43) Veröffentlichungstag der Anmeldung: 02.09.81 Patentblatt 81/35

(84) Benannte Vertragsstaaten: BE CH DE FR GB IT LI LU NL SE

(71) Anmelder: CHEMISCHE WERKE HÜLS AG
Postfach 1320
D-4370 Marl 1(DE)

(72) Erfinder: Brandt, Siegfried, Dr.
Grabenstrasse 8
D-4690 Herne 2(DE)

(72) Erfinder: Disteldorf, Josef, Dr.
Am Sengenhoff 2a
D-4690 Herne 1(DE)

(72) Erfinder: Hübel, Werner, Dr.
Birnenbruchstrasse 34
D-4690 Herne 1(DE)

(74) Vertreter: Steil, Hanna, Dipl.-Chem.
RSP PATENTE - PB 40 Herzogstrasse 28 Postfach 2840
D-4690 Herne 2(DE)

## (54) Polyamide für Form- und Überzugsmassen.

(57) Polyamide für Form- und Überzugsmassen mit Kristallitschmelzpunkten zwischen 105°C und 180°C, die zu 50 - 100 % aus Struktureinheiten der Formel

$$\left[ OC-R-CO-NH-R'-NH \right] \quad I$$

und zu 0 - 50 % aus Struktureinheiten der Formel

$$\left[ OC-R''-NH \right] \quad II$$

bestehen, wobei der Rest R zu 80 - 100 % aus unverzweigten Kohlenwasserstoff-Resten

$$\left[ CH_2 \right]_n \quad \text{mit } n = 4 - 11,$$

und zu 0 - 20 % aus Kohlenwasserstoff-Resten der Formel

$$\left[ CR'''_2 \right]_s$$

besteht, in dem s = 3 - 11

R''' = H oder Methyl oder Ethyl ist und 1 - 4 Rest R''' Methyl oder Ethyl sind,

und R' zu 50 - 100%, vorzugsweise 80 - 100 % der 5-Methylnonamethylenrest, zu 0-50% vorzugsweise 0 - 20 % ein geradkettiger oder verzweigter Kohlenwasserstoff-Rest $C_nH_{2n}$ ist, mit n = 6 - 12, und mit mindestens 5 C-Atomen in der Kette und R'' der Rest $\left[ CH_2 \right]_q$

mit q = 5 - 11 ist.

EP 0 034 782 A2

CHEMISCHE WERKE HÜLS AG
-RSP PATENTE-

O.Z. 3626-H



# Polyamide für Form- und Überzugsmassen

Die Erfindung betrifft Polyamide aus 5-Methylnonamethylendiamin (MNDA) und aliphatischen Dicarbonsäuren.

Die Polyamide aus Nonamethylendiamin (NDA) und aliphatischen unverzweigten Dicarbonsäuren insbesondere Adipinsäure, Azelainsäure, Sebacinsäure und Decandicarbonsäure sind Werkstoffe mit hohen Festigkeiten und Zähigkeiten wie sie für teilkristalline Polyamide charakteristisch sind. Sie haben jedoch bereits so niedrige Kristallit-Schmelzpunkte ($T_m$), daß ihre Anwendungsmöglichkeiten eingeschränkt sind. Andererseits liegen die $T_m$ aber noch zu hoch, als daß man diese Polyamide für Schmelzbeschichtungen verwenden könnte. Reduziert man die $T_m$ durch Cokondensation mit dritten Polyamid-Bildnern, d.h. mit Aminocarbonsäuren oder Lactamen oder mit Nylonsalzen anderer Zusammensetzung, so vermindert man gleichzeitig die Kristallinität. Die so erhaltenen Copolyamide sind nur noch gering kristallin und werden zunehmend empfindlich, d.h. quellbar in organischen Lösungsmitteln z.B. in Alkoholen, Ketonen, Kohlenwasserstoffen und Halogen-Kohlenwasserstoffen. Außerdem sinkt die Stabilität gegen Hydrolyse unter Tropenbedingungen.

Es ist bekannt, daß man den gleichen Effekt - gleichzeitige Herabsetzung der Kristallinität und des Kristallit-Schmelzpunkts - erhält, wenn man in einem Polyamid die Diaminkomponente ersetzt durch ein Diamin der gleichen Kettenlänge, dessen C-Kette jedoch verzweigt ist, z.B. Hexamethylendiamin durch 3-Methylhexamethylendiamin.

Es war daher überraschend, daß man bei Ersatz von NDA in Polyamiden durch MNDA zwar niedrigere Schmelztemperaturen erhält, daß aber gleichzeitig die Kristallinitäten auf voller Höhe erhalten bleiben. Dadurch werden die Schmelztemperaturen soweit erniedrigt, daß Schmelzbeschichtungen leicht möglich werden, ohne daß die durch die Kristallinität bedingten guten Eigenschaften, wie Resistenz gegen Lösungsmittel und Wasser beeinträchtigt werden.

Gegenstand der Erfindung sind daher Polyamide für Form- und Überzugsmassen mit Kristallit-Schmelzpunkten zwischen 105 °C und 180 °C, die zu 50 - 100 % aus Struktureinheiten der Formel

$$-\left[OC-R-CO-NH-R'-NH\right]- \qquad I$$

und zu 0 - 50 % aus Struktureinheiten der Formel

$$-\left[OC-R''-NH\right]- \qquad II$$

bestehen, wobei der Rest R zu 80 - 100 % aus unverzweigten Kohlenwasserstoff-Resten $-\left[CH_2\right]-_n$ mit n = 4 - 11, und zu 0 - 20 % aus Kohlenwasserstoff-Resten der Formel

$$-\left[CR'''_2\right]-_s$$

besteht, in dem s = 3 - 11

R"' = H oder Methyl oder Ethyl ist und 1 - 4 Reste R"' Methyl oder Ethyl sind,

und R' zu 50 - 100 %, vorzugsweise 80 - 100 % der 5-Methylnonamethylenrest, zu 0 - 50 %, vorzugsweise 0 - 20 % ein geradkettiger oder verzweigter Kohlenwasserstoff-Rest $C_nH_{2n}$ ist, mit n = 6 - 12, und mit mindestens 5 C-Atomen in der Kette und

R" der Rest $-[CH_2]_q-$ mit q = 5 - 11 ist.

Besonders bevorzugt sind Polyamide, in denen R' zu mehr als 85 % der 5-Methylnonamethylenrest ist. Die Säuren $R(COOH)_2$ können z.B. sein: Adipinsäure, Azelainsäure, Sebacinsäure, Dodecandisäure.

Säuren der Formel

$$HOOC-[CR"'_2]_s-COOH$$

können sein:

3-Methylglutarsäure, 2,4,4- oder 2,2,4-Trimethyladipinsäure oder 4-Methylheptandisäure. Im Rahmen der angegebenen Grenzen liegt auch technische Azelainsäure der Bezeichnung Emerox® 1144, Handelsname der Firma Unilever-Emery, die neben 92 % Azelainsäure noch 8 % hauptsächlich kürzerkettige Dicarbonsäuren enthält. Das bevorzugte Diamin ist 5-Methylnonamethylendiamin.

Codiamin der Struktureinheit I kann z.B. Hexandiamin-(1,6), Nonandiamin-(1,9), Decandiamin-(1,10), Dodecandiamin-(1,12) sein. Bevorzugt sind die bei der Herstellung des 5-MNDA anfallenden isomeren Diamine, z.B. 2,4-Dimethyloctandiamin-(1,8), 2,4,6-Trimethylheptandiamin-(1,7), die von kleinen Anteilen

N-methylierter Diamine begleitet sein können.

In manchen Fällen hat es sich als vorteilhaft erwiesen, Aminocarbonsäuren gemäß Strukturformel II mitzuverwenden. Auch in diesen Copolyamiden ist ein Einfluß der Methylgruppe des MNDA auf die Kristallinität nur in geringem Maße festzustellen, so daß man sich hier sowohl die Vorteile relativ hoher Teilkristallinität als auch niedriger Schmelztemperaturen zunutze machen kann.

Die Polyamide der erfindungsgemäßen Zusammensetzungen haben auch in Bezug auf die Schmelzviskosität Vorteile. Sie verhalten sich so, daß sie - entsprechend ihrer Teilkristallinität - unterhalb des Schmelzpunktes, der erfindungsgemäß niedrig liegt, nicht wesentlich erweichen, d.h. auch nicht klebrig werden. Nach dem Schmelzen nimmt aber die Viskosität mit steigender Temperatur so schnell ab, daß die Verarbeitung auf den gängigen Maschinen ohne Schwierigkeiten möglich ist und auch die Auftragung als Pulver, auch über heisse Walzen erfolgen kann. Das Schmelzverhalten wird durch den Schmelzindex (MFI 2,16) charakterisiert.

Die Polyamide der erfindungsgemäßen Zusammensetzung sind leicht herstellbar z.B. durch Schmelzkondensation bei Temperaturen zwischen 180 und 300 °C. Die Dicarbonsäuren können auch in Form von Derivaten wie Estern und Dichloriden, die Amine auch in Form von N-Acylderivaten, die Aminocarbonsäuren auch in Form der Lactame eingesetzt werden. Die Molgewichte können in der üblichen Weise z.B. durch Überschuß an Dicarbonsäure oder Diamin oder durch Zusatz monofunktioneller Säuren oder Amine eingestellt werden. Die bevorzugten Molgewichte liegen zwischen 6.000 und 30.000.

Die erfindungsgemäßen Polyamide können nach den üblichen Verfahren für Thermoplaste verarbeitet werden, z.B. durch Extrusion, Spritzguß, Pressen usw.. Es können ohne Schwierigkeiten auch die üblichen Zusätze an Füllstoffen, Verstärkungsmitteln, Farbstoffen, Stabilisatoren, Gleitmittel usw. eingemischt werden.

Die erfindungsgemäßen Polyamide eignen sich besonders für die Beschichtung und Verklebung von Textilien. Ihre Kristallitschmelzpunkte liegen deutlich über dem Siedepunkt des Wassers und können andererseits leicht auf Werte $< 180$ °C eingestellt werden, so daß eine thermische Schädigung der Textilien bei der Schmelzbeschichtung nicht erfolgt.

<u>Beispiel 1</u>

In einem Rührautoklaven werden 289 g Dodecandisäure-(1,12) (D) in 300 g Wasser suspendiert. 211 g eines $C_{10}$-Diamingemisches, das zu 95 % aus 5-MNDA, zu 4,5% aus 2,4-Dimethyloctandiamin-(1,8) und zu 0,5 % aus 2,4,6-Trimethylheptandiamin-(1,7) besteht, werden unter Rühren zu der Suspension gegeben. Nach Verdrängen der Luft durch Stickstoff wird das Reaktionsgemisch 1 h auf 220 °C erhitzt. Danach wird bei dieser Temperatur das Wasser abdestilliert. Zum Schluß wird noch 1 h auf 250 °C erhitzt und dabei ein Vakuum von 200 mbar angelegt.

Das Reaktionsprodukt hat eine reduzierte spezifische Viskosität von 0,9 dl/g. Der Kristallit-Schmelzpunkt $T_m$ liegt bei 170 °C (DSC). Die Schmelzenthalpie beträgt

54 J/g. Das Polyamid wird bei 175 °C in einem Extruder aufgeschmolzen und durch eine Breitschlitzdüse gepreßt. Die erhaltene Folie von 0,2 mm Dicke wird bei 175 °C durch Pressen auf ein Baumwollgewebe geklebt. Der lederähnliche Verbundstoff ist unempflindlich gegen Methanol und Ethanol und gegen kochendes Wasser.

Ein unter den gleichen Bedingungen hergestelltes Polyamid aus NDA und D hat ein $T_m$ von 204 °C und eine Schmelzenthalpie von 56 J/g. Es läßt sich nicht bei 180 °C verarbeiten. Bei einer Temperatur von 210 °C läßt es sich aufkalandrieren, wobei der Baumwollstoff eine Gelbfärbung annimmt.

Beispiel 2

268 g eines $C_{10}$-Diamingemisches, das zu 98,5% aus 5-MNDA zu 1,2 % aus 2,4-Dimethyloctandiamin besteht
235 g Dodecandisäure-(1,12)
98 g 11-Aminoundecansäure
werden in einem Rührautoklaven, wie in Beispiel 1 beschrieben, kondensiert.

Das Reaktionsprodukt hat eine reduzierte spezifische Viskosität von 0,8 dl/g. Sein $T_m$ liegt bei 158 °C, die Schmelzenthalpie beträgt 55 J/g. Das Polyamid wird in einem Extruder bei 165 °C aufgeschmolzen und durch eine Breitschlitzdüse auf einen Baumwollstoff gepreßt. Das beschichtete Gewebe wird anschließend durch Pressen zwischen beheizten Walzen bei 80 °C geglättet. Der flexible Verbundstoff ist unempfindlich gegen Methanol und Ethanol und gegen kochendes Wasser.

Ein unter gleichen Bedingungen hergestelltes Polyamid aus den gleichen molaren Mengen NDA, D und Aminoundecansäure hat ein $T_m$ von 183 °C und eine Schmelzenthalpie von 52 J/g. Es läßt sich nicht bei 180 °C verarbeiten. Extrudiert man es bei 195 °C, so kann man mit der Schmelze ein Baumwollgewebe beschichten. Der Verbundstoff ist jedoch gelblich verfärbt und rissig.

Beispiel 3

199 g 5-Methylnonamethylendiamin
276 g Dodecandisäure-(1,12)
26 g Caprolactam
300 g Wasser
0,3 g Phosphorige Säure
werden in einem Rührautoklaven 2 Stunden auf 240 °C erhitzt. Danach wird bei dieser Temperatur das Wasser abdestilliert. Anschließend wird noch 1 Stunde im Stickstoffstrom und eine Stunde unter Reduzieren des Druckes auf 300 mbar bei 250 °C gerührt.

Das so erhaltene Polyamid hat eine reduzierte spezifische Viskosität von 0,9 dl/g, ein $T_m$ von 159 °C und ein Schmelzenthalpie von 55 J/g.
Es wird bei 165 °C in einem Extruder aufgeschmolzen und durch eine Breitschlitzdüse extrudiert. Die erhaltene Folie wird zusammen mit einem Baumwollgewebe zwischen Walzen gepresst, die auf der Gewebeseite eine Temperatur von 175 °C und auf der Folienseite 140 °C haben.
Der erhaltene Verbundstoff ist flexibel und unempfindlich gegen Methanol und Ethanol sowie gegen kochendes Wasser.
Ein unter den gleichen Bedingungen hergestelltes Polyamid aus gleichen molaren Mengen NDA, Dodecandisäure-(1,12) und Caprolactam hatte ein $T_m$ von 192 °C und eine

Schmelzenthalpie von 58 J/g. Es erforderte zur Extrusion eine Temperatur von 210 °C und zum Aufpressen auf Baumwollgewebe auf der Gewebeseite eine Walzentemperatur von 205 °C, wobei das Gewebe sich gelblich verfärbte.

Beispiel 4

212 g eines $C_{10}$-Diamingemisches, bestehend aus

85 % 5-Methylnonamethylendiamin
12 % 2,4-Dimethyloctandiamin
2 % 2,4,6-Trimethylheptandiamin

264 g Dodecandisäure-(1,12)
24 g eines Gemisches aus gleichen Teilen 2,2,4- und 2,4,4-Trimethyladipinsäure
300 g Wasser
0,3 g phosphorige Säure

werden in einem Rührautoklaven, wie in Beispiel 1 beschrieben, kondensiert.

Das Reaktionsprodukt hat eine reduzierte spezifische Viskosität von 0,7 dl/g. Sein $T_m$ liegt bei 156 °C, seine Schmelzenthalpie beträgt 50 J/g. Der Schmelzindex MFI 2,16 beträgt bei 140°C (160°; 180°) : 2 (12; 27). Es wurde in einer Stiftmühle gemahlen und auf eine Korngröße von 0,1-0,2 mm abgesiebt. Das Pulver wurde in einer Auftragsmenge von 25 g/m² auf einen Teststreifen eines dichten Leinengewebes der Größe 10x20 cm gestreut, das zur Hälfte mit einem zweiten Teststreifen bedeckt wurde. Der überlappende Teil wurde mit einem Bügeleisen gepreßt, dessen Gleitfläche eine Temperatur von 165 °C hatte. Die Verklebung der beiden Stoffstreifen löste sich nicht beim Kochen mit Wasser, das etwas Waschmittel enthielt, und bei mehrtägigem Lagern in Methanol oder Ethanol.

Beispiel 5

181 g des $C_{10}$-Diamingemisches aus
85 % 5-Methylnonamethylendiamin
12 % 2,4-Dimethyloctandiamin
2 % 2,4,6-Trimethylheptandiamin
250 g Dodecandisäure-(1,12)
40 g Adipinsäure
30 g Hexamethylendiamin
300 g Wasser
werden in einem Rührautoklaven, wie in Beispiel 1 beschrieben, kondensiert.

Das Polyamid hat eine reduzierte spezifische Viskosität von 0,7 dl/g, ein $T_m$ von 145 °C und eine Schmelzenthalpie von 35 J/g. Es wurde unter Kühlung in einer Stiftmühle gemahlen und auf eine Korngröße 0,007 mm abgesiebt. Das feine Pulver wurde in eine wäßrige Dispersion überführt, mit der ein 10 x 20 cm großer Teststreifen eines dichten Leinengewebes zur Hälfte bestrichen wurde, so daß nach Trocknen eine Auftragsmenge von 20 g/$m^2$ gemessen wurde. Die beschichtete Fläche wurde mit einem zweiten Teststreifen bedeckt und einige Sekunden lang mit einem Bügeleisen gepresst, dessen Gleitfläche eine Temperatur von 150 °C hatte. Die Verklebung der beiden Stoffstreifen löste sich nicht beim Kochen mit Wasser, das etwas Waschmittel enthielt und bei mehrtägigem Lagern in Methanol oder Ethanol.

Patentanspruch

Polyamide für Form- und Überzugsmassen mit Kristallitschmelzpunkten zwischen 105 °C und 180 °C, die zu 50 - 100 % aus Struktureinheiten der Formel

$$-\!\!\left[OC\text{-}R\text{-}CO\text{-}NH\text{-}R'\text{-}NH\right]\!\!- \qquad I$$

und zu 0 - 50 % aus Struktureinheiten der Formel

$$-\!\!\left[OC\text{-}R''\text{-}NH\right]\!\!- \qquad II$$

bestehen, wobei der Rest R zu 80 - 100 % aus unverzweigten Kohlenwasserstoff-Resten

$$-\!\!\left[CH_2\right]\!\!-_n \quad \text{mit } n = 4 - 11,$$

und zu 0 - 20 % aus Kohlenwasserstoff-Resten der Formel

$$-\!\!\left[CR'''_2\right]\!\!-_s$$

besteht, in dem s = 3 - 11

R"' = H oder Methyl oder Ethyl ist und 1 - 4 Reste R"' Methyl oder Ethyl sind,

und R' zu 50 - 100 %, vorzugsweise 80 - 100 % der 5-Methylnonamethylenrest, zu 0 - 50 %, vorzugsweise 0 - 20 % ein geradkettiger oder verzweigter Kohlenwasserstoff-Rest $C_nH_{2n}$ ist, mit n = 6 - 12, und mit mindestens 5 C-Atomen in der Kette und

R" der Rest $-\!\!\left[CH_2\right]\!\!-_q$ mit q = 5 - 11 ist.

7472 ri/wi